(19) Europäisches Patentamt
European Patent Office
Office européen des brevets

(11) Veröffentlichungsnummer: **0 381 974 B1**

(12) # EUROPÄISCHE PATENTSCHRIFT

(45) Veröffentlichungstag der Patentschrift: **16.03.94**

(51) Int. Cl.$^5$: **C09B 29/033**, C09B 29/09, D06P 1/18

(21) Anmeldenummer: **90101150.2**

(22) Anmeldetag: **20.01.90**

Die Akte enthält technische Angaben, die nach dem Eingang der Anmeldung eingereicht wurden und die nicht in dieser Patentschrift enthalten sind.

(54) **Thiophenazofarbstoffe mit einer Kupplungskomponente auf Basis von m-Phenylendiamin.**

(30) Priorität: **25.01.89 DE 3902005**

(43) Veröffentlichungstag der Anmeldung:
**16.08.90 Patentblatt 90/33**

(45) Bekanntmachung des Hinweises auf die Patenterteilung:
**16.03.94 Patentblatt 94/11**

(84) Benannte Vertragsstaaten:
**CH DE FR GB IT LI**

(56) Entgegenhaltungen:
**GB-A- 1 268 040**
**GB-A- 2 163 768**

(73) Patentinhaber: **BASF Aktiengesellschaft**
**Carl-Bosch-Strasse 38**
**D-67063 Ludwigshafen(DE)**

(72) Erfinder: **Eilingsfeld, Heinz, Dr.**
**Pierstrasse 9a**
**D-6710 Frankenthal(DE)**
Erfinder: **Etzbach, Karl-Heinz, Dr.**
**Carl-Bosch-Ring 55**
**D-6710 Frankenthal(DE)**
Erfinder: **Hansen, Guenter, Dr.**
**Alwin-Mittasch-Platz 8**
**D-6700 Ludwigshafen(DE)**
Erfinder: **Reichelt, Helmut, Dr.**
**Johann-Gottlieb-Fichte-Strasse 56**
**D-6730 Neustadt(DE)**
Erfinder: **Schefczik, Ernst, Dr.**
**Dubliner Strasse 7**
**D-6700 Ludwigshafen(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die vorliegende Erfindung betrifft neue Thiophenazofarbstoffe der Formel I

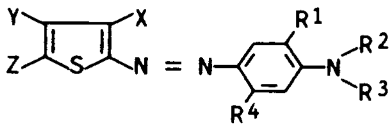

(I),

in der

X Cyano oder $C_1$-$C_4$-Alkoxycarbonyl,

Y Halogen, Hydroxy, Mercapto, gegebenenfalls durch Phenyl substituiertes $C_1$-$C_6$-Alkoxy, $C_5$-$C_7$-Cycloalkoxy, gegebenenfalls substituiertes Phenoxy, gegebenenfalls durch Phenyl substituiertes $C_1$-$C_6$-Alkylthio, $C_5$-$C_7$-Cycloalkylthio, gegebenenfalls substituiertes Phenylthio, $C_1$-$C_6$-Alkylsulfonyl oder gegebenenfalls substituiertes Phenylsulfonyl,

Z Nitro, Cyano, $C_1$-$C_4$-Alkanoyl, Benzoyl, $C_1$-$C_4$-Alkylsulfonyl, Phenylsulfonyl oder einen Rest der Formel $-CH=CB^1B^2$ oder $-CH=N-B^3$, wobei $B^1$ und $B^2$ gleich oder verschieden sind und unabhängig voneinander jeweils für Cyano, $C_1$-$C_6$-Alkoxycarbonyl, dessen Alkylkette gegebenenfalls durch ein oder mehrere Sauerstoffatome unterbrochen ist, oder $C_3$-$C_6$-Alkenyloxycarbonyl oder ein Rest $B^1$ oder $B^2$ für Cyano und der andere für $C_1$-$C_4$-Alkylsulfonyl, gegebenenfalls substituiertes Phenyl, Benzoyl, Phenylsulfonyl oder Carbamoyl und $B^3$ für Hydroxy, $C_1$-$C_4$-Alkoxy, Phenoxy oder Phenylamino stehen,

$R^1$ $C_1$-$C_4$-Alkoxy,

$R^2$ Wasserstoff, $C_1$-$C_{10}$-Alkyl, das durch ein oder mehrere Sauerstoffatome unterbrochen sein kann, oder $R^3$,

$R^3$ einen Rest der Formel $CH_2$-$CH(OR^5)$-$CH_2R^6$ und

$R^4$ gegebenenfalls durch Hydroxy, $C_1$-$C_4$-Alkoxy, Phenoxy, Chlor oder $C_1$-$C_4$-Alkanoyloxy substituiertes $C_1$-$C_6$-Alkanoylamino oder gegebenenfalls substituiertes Benzoylamino bedeuten, wobei

$R^5$ für Wasserstoff, $C_1$-$C_{10}$-Alkanoyl, $C_1$-$C_{10}$-Alkoxycarbonyl oder $C_1$-$C_{10}$-Mono- oder Dialkylcarbamoyl, wobei die Alkylgruppen der genannten Substituenten durch ein oder mehrere Sauerstoffatome unterbrochen sein können, und

$R^6$ für Chlor, Brom, Hydroxy, Phenoxy, Allyloxy, $C_1$-$C_{10}$-Alkoxy, das durch ein oder mehrere Sauerstoffatome unterbrochen oder durch Hydroxy, Phenoxy, Phenyl, $C_1$-$C_8$-Alkanoyloxy, Chlor, Brom oder Cyano substituiert sein kann, $C_1$-$C_6$-Alkanoyloxy oder $C_1$-$C_6$-Mono- oder Dialkylaminocarbonyloxy oder Phenylaminocarbonyloxy stehen.

Aus der EP-A-201 896, der DE-A-3 529 831 und der DE-A-3 535 133 sind bereits Thiophenazofarbstoffe ähnlicher Struktur bekannt.

Auch die GB-A-2 163 768 beschreibt Azofarbstoffe ähnlicher Konstitution. Aufgabe der vorliegenden Erfindung war es nun, neue Thiophenazofarbstoffe, die eine Kupplungskomponente auf Basis von m-Phenylendiamin aufweisen, bereitzustellen, die vorteilhafte anwendungstechnische Eigenschaften zeigen.

Demgemäß wurden die oben näher bezeichneten Thiophenazofarbstoffe der Formel I gefunden.

Alle in den obengenannten Resten auftretenden Alkyl- und Alkenylgruppen können sowohl geradekettig als auch verzweigt sein.

Wenn in der obengenannten Formel I substituierte Phenylreste auftreten, können als Substituenten z. B. $C_1$-$C_4$-Alkyl, $C_1$-$C_4$-Alkoxy oder Halogen, dabei insbesondere Chlor oder Brom, in Betracht kommen.

Wenn in der obengenannten Formel I Alkylgruppen auftreten, die durch Sauerstoffatome unterbrochen sind, sind dabei solche bevorzugt, die durch ein oder zwei Sauerstoffatome unterbrochen sind.

Z in Formel I ist beispielsweise Formyl, Acetyl, Propionyl, Butyryl oder Isobutyryl.

X, $B^1$ und $B^2$ sind beispielsweise Methoxycarbonyl, Ethoxycarbonyl, Propoxycarbonyl, Isopropoxycarbonyl, Butoxycarbonyl oder Isobutoxycarbonyl.

$B^1$ und $B^2$ sind weiterhin z.B. Pentyloxycarbonyl, Isopentyloxycarbonyl, Neopentyloxycarbonyl, Hexyloxycarbonyl, 2-Methoxyethoxycarbonyl, 2-Ethoxyethoxycarbonyl, 2-Butoxyethoxycarbonyl, Allyloxycarbonyl, Methallyloxycarbonyl, Ethylallyloxycarbonyl, Phenyl, 4-Methylphenyl, 2-Ethoxyphenyl, 4-Chlorphenyl oder 2,4-Dichlorphenyl.

$B^1$ und $B^2$ sind weiterhin, ebenso wie Y und Z, beispielsweise Methylsulfonyl, Ethylsulfonyl, Propylsulfonyl, Isopropylsulfonyl oder Butylsulfonyl.

Y ist weiterhin z.B. Fluor, Chlor, Brom, Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy, Benzyloxy, 2-Phenylethoxy, Cyclopentyloxy, Cyclohexyloxy, Cycloheptyloxy, Phenoxy, 4-Methylphenoxy, 4-Isopropylphenoxy, 4-Methoxyphenoxy, 4-Bromphenoxy, Methylthio, Ethylthio, Isopropylthio, Benzylthio, 2-Phenylethylthio, Cyclohexylthio, Phenylthio, 4-Chlorphenylthio, Pentylsulfonyl, Isopentylsulfonyl, Hexylsulfonyl oder 4-Methylphenylsulfonyl.

$R^1$ und $B^3$ sind beispielsweise Methoxy, Ethoxy, Propoxy, Isopropoxy, Butoxy, Isobutoxy oder sec-Butoxy.

Reste $R^2$ sind beispielsweise Methyl, Ethyl, Propyl, Isopropyl, Butyl, Isobutyl, sec-Butyl, tert-Butyl, Pentyl, Isopentyl, Neopentyl, tert-Pentyl, Hexyl, Heptyl, Octyl, 2-Ethylhexyl, Nonyl, Decyl, 2-Methoxyethyl, 2-Ethoxyethyl, 2-Propoxyethyl, 2-Butoxyethyl, 2-Methoxypropyl, 3-Methoxypropyl, 3-Ethoxypropyl, 2-Methoxybutyl, 4-Methoxybutyl, 2-Ethoxybutyl, 4-Ethoxybutyl, 3,6-Dioxaheptyl oder 3,6-Dioxaoctyl.

Reste $R^4$ sind beispielsweise $NHCOCH_3$, $NHCOC_2H_5$, $NHCOC_3H_7$, $NHCOCH_2OCH_3$, $NHCOCH_2OC_2H_5$, $NHCOCH_2OC_6H_5$, $NHCOCH_2OH$, $NHCOCH_2OCOCH_3$, $NHCOCH_2Cl$, $NHCOC_2H_4OCH_3$, $NHCO_6H_5$, $NHCOC_6H_4$-4-$OCH_3$, $NHCOC_6H_4$-4-$CH_3$ oder $NHCOC_6H_4$-4-Cl.

$R^5$ ist beispielsweise Formyl, Acetyl, Propionyl, Butyryl, Isobutyryl, Pentanoyl, Isopentanoyl, Hexanoyl, Heptanoyl, Octanoyl, 2-Ethylhexanoyl, Nonanoyl, Decanoyl, 4-Oxapentanoyl, 4-Oxahexanoyl, 4,7-Dioxaoctanoyl, Methoxycarbonyl, Ethoxycarbonyl, Propoxycarbonyl, Butoxycarbonyl, Isopropoxycarbonyl, Isobutoxycarbonyl, Pentyloxycarbonyl, Hexyloxycarbonyl, Mono- oder Dimethylcarbamoyl, Mono- oder Diethylcarbamoyl, Mono- oder Dipopylcarbamoyl, Mono- oder Diisopropylcarbamoyl oder Mono- oder Dibutylcarbamoyl.

Reste $R^6$ sind neben den bereits genannten z.B. Methoxy, Ethoxy, Propoxy, Isopropoxy, Butoxy, Isobutoxy, Pentyloxy, Hexyloxy, Heptyloxy, Octyloxy, 2-Ethylhexyloxy, Nonyloxy, Decyloxy, 2-Methoxyethoxy, 2-Ethoxyethoxy, 2-Propoxyethoxy, 2-Butoxyethoxy, 2-Methoxypropoxy, 3-Methoxypropoxy, 3-Ethoxypropoxy, 2-Methoxybutoxy, 4-Methoxybutoxy, 2-Ethoxybutoxy, 4-Ethoxybutoxy, 3,6-Dioxaheptyloxy, 3,6-Dioxaoctyloxy, 2-Phenylethoxy, 8-Phenyl-4,7-dioxaoctyloxy, 2-Cyanoethoxy, 2-Cyanopropoxy, 3-Cyanopropoxy, 4-Cyanobutoxy, 5-Cyano-3-oxapentyloxy, 6-Cyano-4-oxahexyloxy, 8-Cyano-4-oxahexyloxy, 2-Hydroxyethoxy, 2- oder 3-Hydroxypropoxy, 2,3-Dihydroxypropoxy, 2-Hydroxybutoxy, 4-Hydroxybutoxy, 5-Hydroxy-3-oxapentyloxy, 6-Hydroxy-4-oxahexyloxy, 8-Hydroxy-4-oxaoctyloxy, 8-Hydroxy-3,6-dioxaoctyloxy, 2-Phenyl-2-hydroxethoxy, 2-Chlorethoxy, 2-Bromethoxy, 2-Phenoxyethoxy, 3-Phenoxypropoxy, 4-Phenoxybutoxy, 5-Phenoxy-3-oxapentyloxy, 6-Phenoxy-4-oxahexyloxy, 8-Phenoxy-4-oxaoctyloxy, 2-Formyloxyethoxy, 2-Acetyloxyethoxy, 2-Propionyloxyethoxy, 2-Butyryloxyethoxy, 2-(2-Ethylhexanoyloxy)ethoxy, 2- oder 3-Acetyloxypropoxy, 2- oder 3-Propionyloxypropoxy, 2- oder 3-(2-Ethylhexanoyloxy)propoxy, 4-Acetyloxybutoxy, 4-Propionyloxybutoxy, 4-(2-Ethylhexanoyloxy)butoxy, 5-Acetyloxy-3-oxapentyloxy, 5-Propionyloxy-3-oxapentyloxy, 5-(2-Ethylhexanoyloxy)-3-oxapentyloxy, 6-Acetyloxy-4-oxahexyloxy, 6-Propionyloxy-4-oxahexyloxy, 6-(2-Ethylhexanoyloxy)-4-oxahexyloxy, 8-Acetyloxy-4-oxaoctyloxy, 8-Propionyloxy-4-oxaoctyloxy, 8-(2-Ethylhexanoyloxy)-4-oxaoctyloxy, Formyloxy, Acetyloxy, Propionyloxy, Butyryloxy, Isobutyryloxy, Pentanoyloxy, Hexanoyloxy, Mono- oder Dimethylcarbamoyloxy, Mono- oder Diethylcarbamoyloxy, Mono- oder Dipropylcarbamoyloxy, Mono- oder Diisopropylcarbamoyloxy, Mono- oder Dibutylcarbamoyloxy oder N-Methyl-N-ethylcarbamoyloxy.

Bevorzugt sind Thiophenazofarbstoffe der Formel I, in der

X Cyano oder $C_1$-$C_4$-Alkoxycarbonyl,
Y Halogen, $C_1$-$C_4$-Alkoxy, Phenylthio oder Phenylsulfonyl,
Z Cyano, Formyl oder einen Rest der Formel $-CH=CB^1B^2$, worin $B^1$ für Cyano und $B^2$ für Cyano oder $C_1$-$C_4$-Alkoxycarbonyl stehen,
$R^1$ $C_1$-$C_4$-Alkoxy,
$R^2$ Wasserstoff oder $C_1$-$C_4$-Alkyl,
$R^3$ ein Rest der Formel $-CH_2-CH(OR^5)-CH_2R^6$ und
$R^4$ $C_1$-$C_4$-Alkanoylamino bedeuten, wobei
$R^5$ für Wasserstoff oder $C_1$-$C_4$-Alkanoyl und
$R^6$ für Chlor, Brom, Hydroxy, Phenoxy, Allyloxy, $C_1$-$C_4$-Alkoxy oder $C_1$-$C_4$-Alkanoyloxy stehen.

Besonders bevorzugt sind Thiophenazofarbstoffe der Formel I in der

X Cyano,
Y Chlor, Brom, Methoxy, Ethoxy, Phenylthio oder Phenylsulfonyl,
Z Cyano oder Formyl,
$R^1$ Methoxy oder Ethoxy,
$R^2$ Wasserstoff oder $C_1$-$C_4$-Alkyl,
$R^3$ ein Rest der Formel $-CH_2-CH(OR^5)-CH_2R^6$ und
$R^4$ $C_1$-$C_4$-Alkanoylamino bedeuten, wobei

$R^5$ für Wasserstoff oder $C_1$-$C_4$-Alkanoyl und
$R^6$ für Chlor, Brom, Hydroxy, Phenoxy, Allyloxy, $C_1$-$C_4$-Alkoxy oder $C_1$-$C_4$-Alkanoyloxy stehen.

Insbesondere sind solche Farbstoffe der Formel I, zu nennen, in der
X Cyano,
Y Chlor oder Ethoxy,
Z Cyano oder Formyl,
$R^2$ Wasserstoff,
$R^4$ Acetylamino und
$R^5$ Wasserstoff bedeuten.

Die erfindungsgemäßen Thiophenazofarbstoffe der Formel I lassen sich nach an sich bekannten Verfahren herstellen. Beispielsweise kann man ein Aminothiophen der Formel II

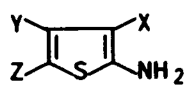 (II),

in der X, Y und Z jeweils die obengenannte Bedeutung besitzen, diazotieren und mit einem m-Phenylendiaminderivat der Formel III

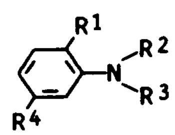 (III),

in der $R^1$, $R^2$, $R^3$ und $R^4$ jeweils die obengenannte Bedeutung besitzen, kuppeln.

Bei den Aminothiophenen II und m-Phenylenderivaten III handelt es sich im allgemeinen um bekannte Verbindungen (siehe z.B. EP-A-193 885 sowie DE-A-3 004 654).

Die neuen Thiophenazofarbstoffe eignen sich vorteilhaft als Dispersionsfarbstoffe zum Färben von textilen Fasern, insbesondere von Polyestern oder Celluloseestern, aber auch von Polyamiden oder Mischgeweben aus Polyestern und Cellulosefasern. Sie zeichnen sich neben hoher Farbstärke durch sehr gute Echtheiten aus.

Die folgenden Beispiele sollen die Erfindung näher erläutern.

Beispiel 1

9,4 g 2-Amino-4-chlor-5-formyl-3-cyanothiophen wurden bei max. 30 °C in 60 ml 85 gew.%iger Schwefelsäure angerührt. Innerhalb 0,5 Stunden wurden 16,6 g Nitrosylschwefelsäure (11,5 % $N_2O_3$) bei 0 bis 5 °C zugetropft und die Mischung bei dieser Temperatur weitere 2 Stunden gerührt.

Die so erhaltene Diazoniumsalzlösung ließ man bei 0 bis 5 °C in eine Mischung von 16 g N-(2-Hydroxy-4-oxaoctyl)-2-methoxy-5-acetylaminoanilin in 25 ml N,N-Dimethylformamid, 100 ml Wasser, 20 ml verdünnter Salzsäure, 0,5 g Amidosulfonsäure sowie 300 g Eis langsam einfließen. Nach Kupplungsende wurde der Farbstoff abgesaugt, neutral gewaschen und getrocknet. Man erhielt 20,9 g des Farbstoffs der Formel

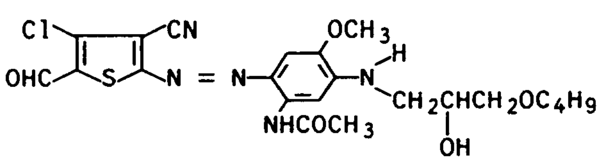

der Polyesterfasern in echten, grünstichig blauen Nuancen färbt.

In analoger Weise werden die in Tabelle 1 aufgeführten Farbstoffe der Formel

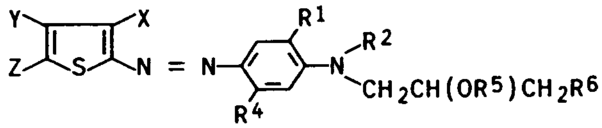

erhalten.

Tabelle 1

| Bsp. Nr. | X | Y | Z | $R^1$ | $R^2$ | $R^4$ | $R^5$ | $R^6$ | Farbton auf PES |
|---|---|---|---|---|---|---|---|---|---|
| 2 | CN | Cl | CHO | $OCH_3$ | H | $NHCOC_2H_5$ | H | $OC_2H_5$ | grünstich. blau |
| 3 | CN | Cl | CHO | $OC_2H_5$ | H | $NHCOCH_3$ | H | $OC_4H_9$ | grünstich. blau |
| 4 | CN | Cl | CHO | $OHC_3$ | H | $NHCOCH_3$ | H | $OCH_3$ | grünstich. blau |
| 5 | CN | Cl | CHO | $OCH_3$ | H | $NHCOCH_3$ | H | $OC_6H_5$ | grünstich. blau |
| 6 | CN | Cl | CHO | $OCH_3$ | H | $NHCOCH_3$ | H | OH | grünstich. blau |
| 7 | CN | Cl | CHO | $OCH_3$ | H | $NHCOCH_3$ | H | $OC_2H_4OC_2H_5$ | grünstich. blau |
| 8 | CN | Cl | CHO | $OCH_3$ | H | $NHCOCH_3$ | H | $OCH_3$ | grünstich. blau |
| 9 | CN | Br | CHO | $OH_3$ | H | $NHCOCH_3$ | H | $OC_4H_9$ | grünstich. blau |
| 10 | CN | Cl | CHO | $OC_2H_5$ | H | $NHCOC_2H_5$ | H | $OC_4H_9$ | grünstich. blau |
| 11 | CN | Cl | CHO | $OCH_3$ | H | $NHCOC_2H_5$ | H | $OC_2H_4OC_2H_5$ | grünstich. blau |
| 12 | CN | Cl | CHO | $OCH_3$ | H | $NHCOCH_2OCH_3$ | H | OH | grünstich. blau |
| 13 | CN | Cl | CHO | $OCH_3$ | H | $NHCOC_6H_5$ | H | $OC_4H_9$ | grünstich. blau |
| 14 | CN | Cl | CHO | $OCH_3$ | $C_2H_5$ | $NHCOCH_3$ | H | $OC_4H_9$ | grünstich. blau |
| 15 | CN | Cl | CHO | $OCH_3$ | $C_4H_9$ | $NHCOCH_3$ | H | $OC_2H_5$ | grünstich. blau |
| 16 | CN | Cl | 1) | $OCH_3$ | H | $NHCOCH_3$ | H | $OC_4H_9$ | grün |
| 17 | CN | Cl | 2) | $OCH_3$ | H | $NHCOCH_3$ | H | $OC_4H_9$ | grün |
| 18 | 3) | Cl | CHO | $OCH_3$ | H | $NHCOCH_3$ | H | $OC_4H_9$ | blau |
| 19 | CN | Cl | CHO | $OCH_3$ | H | $NHCOCH_3$ | H | Cl | grünstich. blau |

1) $CH = C(CN)_2$ 2) $CH = C(CN)CO_2C_4H_9$ 3) $CO_2C_2H_5$

Beispiel 20

9,18 g 2-Amino-4-chlor-3,5-dicyanothiophen wurden in eine Mischung aus 120 ml Eisessig/Propionsäure (3 : 1 v/v) und 20 ml 85 gew.%ige Schwefelsäure eingetragen. Bei 0 bis 5 °C wurden 17,3 g Nitrosylschwefelsäure (11,5 % $N_2O_3$) zugetropft und die Mischung 3 Stunden bei dieser Temperatur gerührt.

Die Diazoniumsalzlösung wurde bei 0 bis 5 °C in eine Mischung von 16 g N-(2-Hydroxy-4-oxaoctyl)-2-methoxy-5-acetylaminoanilin in 50 ml N,N-Dimethylformamid, 100 ml Wasser, 20 ml verdünnter Salzsäure, 0,5 g Amidosulfonsäure sowie 300 g Eis getropft. Nach 2 Stunden bei 0 bis 5 °C wurde aufgearbeitet, der Farbstoff abgesaugt, neutral gewaschen und getrocknet. Man erhielt 16,6 g des Farbstoffs der Formel

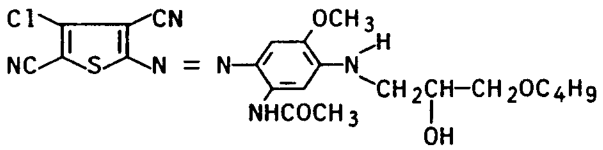

der Polyester licht- und thermofixierecht grünstichig blau färbt.

In analoger Weise werden die in der folgenden Tabelle 2 aufgeführten Farbstoffe der Formel

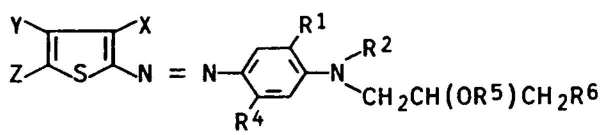

erhalten.

Tabelle 2

| Bsp. Nr. | X | Y | Z | $R^1$ | $R^2$ | $R^4$ | $R^5$ | $R^6$ | Farbton auf PES |
|---|---|---|---|---|---|---|---|---|---|
| 21 | CN | Cl | CN | $OCH_3$ | H | $NHCOC_2H_5$ | H | $OC_2H_5$ | grünstich. blau |
| 22 | CN | Cl | CN | $OC_2H_5$ | H | $NHCOCH_3$ | H | $OC_4H_9$ | grünstich. blau |
| 23 | CN | Cl | CN | $OCH_3$ | H | $NHCOCH_3$ | H | $OCH_3$ | grünstich. blau |
| 24 | CN | Cl | CN | $OCH_3$ | H | $NHCOCH_3$ | H | $OC_6H_5$ | grünstich. blau |
| 25 | CN | Cl | CN | $OCH_3$ | H | $NHCOCH_3$ | H | OH | grünstich. blau |
| 26 | CN | Cl | CN | $OCH_3$ | H | $NHCOCH_3$ | H | $OC_2H_4OC_2H_5$ | grünstich. blau |
| 27 | CN | Cl | CN | $OCH_3$ | H | $NHCOCH_3$ | H | $OCH_3$ | grünstich. blau |
| 28 | CN | Br | CN | $OCH_3$ | H | $NHCOCH_3$ | H | $OC_4H_9$ | grünstich. blau |
| 29 | CN | Cl | CN | $OC_2H_5$ | H | $NHCOC_2H_5$ | H | $OC_4H_9$ | grünstich. blau |
| 30 | CN | Cl | CN | $OCH_3$ | H | $NHCOC_2H_5$ | H | $OC_2H_4OC_2H_5$ | grünstich. blau |
| 31 | CN | Cl | CN | $OCH_3$ | H | $NHCOCH_2OCH_3$ | H | OH | grünstich. blau |
| 32 | CN | Cl | CN | $OCH_3$ | H | $NHCOC_6H_5$ | H | $OC_4H_9$ | grünstich. blau |
| 33 | CN | Cl | CN | $OCH_3$ | $C_2H_5$ | $NHCOCH_3$ | H | $OC_4H_9$ | grünstich. blau |
| 34 | CN | Cl | CN | $OCH_3$ | $C_4H_9$ | $NHCOCH_3$ | H | $OC_2H_5$ | grünstich. blau |
| 35 | CN | Cl | $NO_2$ | $OCH_3$ | H | $NHCOCH_3$ | H | $OC_4H_9$ | grün |
| 36 | CN | Cl | $NO_2$ | $OCH_3$ | H | $NHCOCH_3$ | H | $OC_4H_9$ | grün |
| 37 | 1) | Cl | CN | $OCH_3$ | H | $NHCOCH_3$ | H | $OC_4H_9$ | blau |
| 38 | CN | Cl | CN | $OCH_3$ | H | $NHCOCH_3$ | H | Cl | grünstich. blau |

1) $CO_2C_2H_5$

Beispiel 39

2,54 g des in Beispiel 1 beschriebenen Farbstoffs wurden in 20 ml N,N-Dimethylformamid mit 1,02 g Acetanhydrid und 0,30 g trockenem Natriumacetat versetzt und 2 Stunden auf 65 °C erhitzt.

Nach dem Abkühlen auf 25 °C wurde die Mischung auf 200 ml Eiswasser gegossen und aufgearbeitet.

Man erhielt 2,2 g des Farbstoffs der Formel

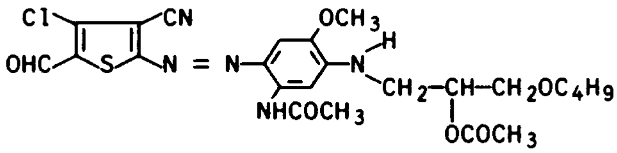

der Polyester grünstichig mit guten Allgemeinechtheiten färbt.

In analoger Weise werden die in der folgenden Tabelle 3 aufgeführten Farbstoffe der Formel

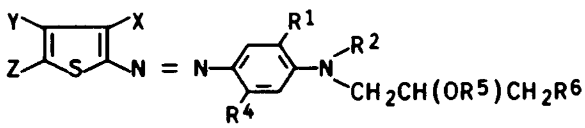

erhalten.

Tabelle 3

| Bsp. Nr. | X | Y | Z | $R^1$ | $R^2$ | $R^4$ | $R^5$ | $R^6$ | Farbton auf PES |
|---|---|---|---|---|---|---|---|---|---|
| 40 | CN | Cl | CHO | $OCH_3$ | H | $NHCOCH_3$ | $COC_2H_5$ | $OC_4H_9$ | grünstich. blau |
| 41 | CN | Cl | CHO | $OCH_3$ | H | $NHCOCH_3$ | $COC_4H_9$ | $OC_4H_9$ | grünstich. blau |
| 42 | CN | Cl | CHO | $OCH_3$ | H | $NHCOCH_3$ | $COC_6H_{13}$ | $OCH_3$ | grünstich. blau |
| 43 | CN | Cl | CHO | $OCH_3$ | H | $NHCOCH_3$ | $CO_2C_2H_5$ | $OC_2H_5$ | grünstich. blau |
| 44 | CN | Cl | CHO | $OCH_3$ | H | $NHCOC_2H_5$ | 1) | $OC_6H_5$ | grünstich. blau |
| 45 | CN | Cl | CHO | $OCH_3$ | H | $NHCOCH_3$ | 2) | $OC_4H_9$ | grünstich. blau |
| 46 | CN | Cl | CHO | $OC_2H_5$ | H | $NHCOCH_3$ | $COC_3H_7$ | $OCH_3$ | grünstich. blau |
| 47 | CN | Br | CHO | $OCH_3$ | H | $NHCOCH_3$ | $COCH_3$ | $OC_2H_5$ | grünstich. blau |
| 48 | 3) | Cl | CHO | $OCH_3$ | H | $NHCOCH_3$ | $COCH_3$ | $OC_4H_9$ | blau |
| 49 | CN | Cl | CN | $OCH_3$ | H | $NHCOCH_3$ | $COC_2H_5$ | $OCH_3$ | grünstich. blau |
| 50 | CN | Cl | CN | $OCH_3$ | $C_2H_5$ | $NHCOCH_3$ | $COC_5H_{11}$ | $OCH_3$ | grünstich. blau |

1) $COC_2H_4OCH_3$ 2) $CON(C_2H_5)_2$ 3) $CO_2Et$

## Patentansprüche

**1.** Thiophenazofarbstoffe der Formel I

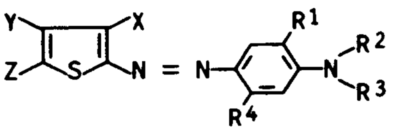

(I),

in der

X Cyano oder $C_1$-$C_4$-Alkoxycarbonyl,

Y Halogen, Hydroxy, Mercapto, gegebenenfalls durch Phenyl substituiertes $C_1$-$C_6$-Alkoxy, $C_5$-$C_7$-Cycloalkoxy, gegebenenfalls substituiertes Phenoxy, gegebenenfalls durch Phenyl substituiertes $C_1$-$C_6$-Alkylthio, $C_5$-$C_7$-Cycloalkylthio, gegebenenfalls substituiertes Phenylthio, $C_1$-$C_6$-Alkylsulfonyl oder gegebenenfalls substituiertes Phenylsulfonyl,

Z Nitro, Cyano, $C_1$-$C_4$-Alkanoyl, Benzoyl, $C_1$-$C_4$-Alkylsulfonyl, Phenylsulfonyl oder einen Rest der Formel $-CH=CB^1B^2$ oder $-CH=N-B^3$, wobei $B^1$ und $B^2$ gleich oder verschieden sind und unabhängig voneinander jeweils für Cyano, $C_1$-$C_6$-Alkoxycarbonyl, dessen Alkylkette gegebenenfalls durch ein oder mehrere Sauerstoffatome unterbrochen ist, oder $C_3$-$C_6$-Alkenyloxycarbonyl oder ein Rest $B^1$ oder $B^2$ für Cyano und der andere für $C_1$-$C_4$-Alkylsulfonyl, gegebenenfalls substituiertes Phenyl, Benzoyl, Phenylsulfonyl oder Carbamoyl und $B^3$ für Hydroxy, $C_1$-$C_4$-Alkoxy, Phenoxy oder Phenylamino stehen,

$R^1$ $C_1$-$C_4$-Alkoxy,

$R^2$ Wasserstoff, $C_1$-$C_{10}$-Alkyl, das durch ein oder mehrere Sauerstoffatome unterbrochen sein kann, oder $R^3$,

$R^3$ einen Rest der Formel $CH_2$-$CH(OR^5)$-$CH_2R^6$ und

$R^4$ gegebenenfalls durch Hydroxy, $C_1$-$C_4$-Alkoxy, Phenoxy, Chlor oder $C_1$-$C_4$-Alkanoyloxy substituiertes $C_1$-$C_6$-Alkanoylamino oder gegebenenfalls substituiertes Benzoylamino bedeuten, wobei

$R^5$ für Wasserstoff, $C_1$-$C_{10}$-Alkanoyl, $C_1$-$C_{10}$-Alkoxycarbonyl oder $C_1$-$C_{10}$-Mono- oder Dialkylcarbamoyl, wobei die Alkylgruppen der genannten Substituenten durch ein oder mehrere Sauerstoffatome unterbrochen sein können, und

$R^6$ für Chlor, Brom, Hydroxy, Phenoxy, Allyloxy, $C_1$-$C_{10}$-Alkoxy, das durch ein oder mehrere Sauerstoffatome unterbrochen oder durch Hydroxy, Phenoxy, Phenyl, $C_1$-$C_8$-Alkanoyloxy, Chlor, Brom oder Cyano substituiert sein kann, $C_1$-$C_6$-Alkanoyloxy oder $C_1$-$C_6$-Mono- oder Dialkylaminocarbonyloxy oder Phenylaminocarbonyloxy stehen.

**2.** Thiophenazofarbstoffe gemäß Anspruch 1, dadurch gekennzeichnet, daß

X Cyano oder $C_1$-$C_4$-Alkoxycarbonyl,

Y Halogen, $C_1$-$C_4$-Alkoxy, Phenylthio oder Phenylsulfonyl,

Z Cyano, Formyl oder einen Rest der Formel $-CH=CB^1B^2$, worin $B^1$ für Cyano und $B^2$ für Cyano oder $C_1$-$C_4$-Alkoxycarbonyl stehen,

$R^1$ $C_1$-$C_4$-Alkoxy,

$R^2$ Wasserstoff oder $C_1$-$C_4$-Alkyl,

$R^3$ ein Rest der Formel $-CH_2$-$CH(OR^5)$-$CH_2R^6$ und

$R^4$ $C_1$-$C_4$-Alkanoylamino bedeuten, wobei

$R^5$ für Wasserstoff oder $C_1$-$C_4$-Alkanoyl und

$R^6$ für Chlor, Brom, Hydroxy, Phenoxy, Allyloxy, $C_1$-$C_4$-Alkoxy oder $C_1$-$C_4$-Alkanoyloxy stehen.

**3.** Verwendung der Thiophenazofarbstoffe gemäß Anspruch 1 zum Färben von textilen Fasern.

## Claims

**1.** A thiopheneazo dye of the formula I

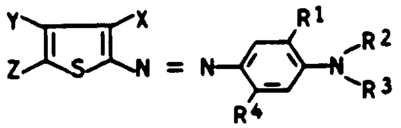

(I),

where

X is cyano or $C_1$-$C_4$-alkoxycarbonyl,

Y is halogen, hydroxyl, mercapto, unsubstituted or phenyl-substituted $C_1$-$C_6$-alkoxy, $C_5$-$C_7$-cycloalkoxy, substituted or unsubstituted phenoxy, unsubstituted or phenyl-substituted $C_1$-$C_6$-alkylthio, $C_5$-$C_7$-cycloalkylthio, substituted or unsubstituted phenylthio, $C_1$-$C_6$-alkylsulfonyl or substituted or unsubstituted phenylsulfonyl,

Z is nitro, cyano, $C_1$-$C_4$-alkanoyl, benzoyl, $C_1$-$C_4$-alkylsulfonyl, phenylsulfonyl or a radical of the formula $-CH=CB^1B^2$ or $-CH=N-B^3$, in which $B^1$ and $B^2$ are identical or different and each independently of the other are cyano, $C_1$-$C_6$-alkoxycarbonyl whose alkyl chain may be interrupted by one or more oxygen atoms, or $C_3$-$C_6$-alkenyloxycarbonyl or one of $B^1$ and $B^2$ is cyano and the other is $C_1$-$C_4$-alkylsulfonyl, substituted or unsubstituted phenyl, benzoyl, phenylsulfonyl or carbamoyl and $B^3$ is hydroxyl, $C_1$-$C_4$-alkoxy, phenoxy or phenylamino,

$R^1$ is $C_1$-$C_4$-alkoxy,

$R^2$ is hydrogen, $C_1$-$C_{10}$-alkyl which may be interrupted by one or more oxygen atoms, or $R^3$,

$R^3$ is a radical of the formula $CH_2-CH(OR^5)-CH_2R^6$ and

$R^4$ is unsubstituted or hydroxyl-, $C_1$-$C_4$-alkoxy-, phenoxy-, chlorine- or $C_1$-$C_4$-alkanoyloxy-substituted $C_1$-$C_6$-alkanoylamino or substituted or unsubstituted benzoylamino,

$R^5$ being hydrogen, $C_1$-$C_{10}$-alkanoyl, $C_1$-$C_{10}$-alkoxycarbonyl or $C_1$-$C_{10}$-mono- or -dialkyl-carbamoyl, the alkyl groups of said substituents being uninterrupted or interrupted by one or more oxygen atoms, and

$R^6$ being chlorine, bromine, hydroxyl, phenoxy, allyloxy, $C_1$-$C_{10}$-alkoxy which may be interrupted by one or more oxygen atoms or substituted by hydroxyl, phenoxy, phenyl, $C_1$-$C_8$-alkanoyloxy, chlorine, bromine or cyano, $C_1$-$C_6$-alkanoyloxy, $C_1$-$C_6$-mono- or -dialkylaminocarbonyloxy or phenylaminocarbonyloxy.

**2.** A thiopheneazo dye as claimed in claim 1, wherein

X is cyano or $C_1$-$C_4$-alkoxycarbonyl,

Y is halogen, $C_1$-$C_4$-alkoxy, phenylthio or phenylsulfonyl,

Z is cyano, formyl or a radical of the formula $-CH=CB^1B^2$, in which $B^1$ is cyano and $B^2$ is cyano or $C_1$-$C_4$-alkoxycarbonyl,

$R^1$ is $C_1$-$C_4$-alkoxy,

$R^2$ is hydrogen or $C_1$-$C_4$-alkyl,

$R^3$ is a radical of the formula $-CH_2-CH(OR^5)-CH_2R^6$ and

$R^4$ is $C_1$-$C_4$-alkanoylamino,

$R^5$ being hydrogen or $C_1$-$C_4$-alkanoyl and

$R^6$ being chlorine, bromine, hydroxy, phenoxy, allyloxy, $C_1$-$C_4$-alkoxy or $C_1$-$C_4$-alkanoyloxy.

**3.** The use of a thiopheneazo dye as claimed in claim 1 for dyeing textile fibers.

## Revendications

**1.** Colorants azoïques de la famille du thiophène, de formule I

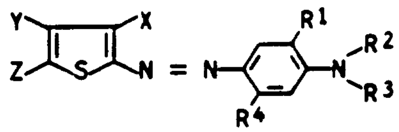

(I),

dans laquelle

X est un radical cyano ou (alcoxy en $C_1$-$C_4$)carbonyle,

Y est un atome d'halogène ou un radical hydroxy, mercapto, alcoxy en $C_1$-$C_6$ éventuellement substitué par un reste phényle, cycloalcoxy en $C_5$-$C_7$, phénoxy éventuellement substitué, (alkyl en $C_1$-$C_6$)thio éventuellement substitué par un resté phényle. (cycloalkyl en $C_5$-$C_7$)thio, phénylthio éventuellement substitué, (alkyl en $C_1$-$C_6$)sulfonyle ou phénylsulfonyle éventuellement substitué,

Z est un radical nitro, cyano, alcanoyle en $C_1$-$C_4$,benzoyle, (alkyl en $C_1$-$C_4$)sulfonyle, phénylsulfonyle ou un reste de formule $-CH=CB^1B^2$ ou $-CH=N-B^3$, $B^1$ et $B^2$ étant identiques ou différents et étant mis chacun, indépendamment l'un de l'autre, pour un reste cyano, (alcoxy en $C_1$-$C_6$)carbonyle dont la chaîne alkyle est éventuellement interrompue par un ou plusieurs atomes d'oxygène, ou (alcényl en $C_3$-$C_6$)oxycarbonyle, ou bien l'un des restes $B^1$ et $B^2$ étant un radical cyano et l'autre étant un radical (alkyl en $C_1$-$C_4$)sulfonyle, phényle éventuellement substitué, benzoyle, phénylsulfonyle ou carbamoyle, et $B^3$ étant mis pour un radical hydroxy, alcoxy en $C_1$-$C_4$, phénoxy ou phénylamino,

$R^1$ représente un radical alcoxy en $C_1$-$C_4$,

$R^2$ représente un atome d'hydrogène ou un radical alkyle en $C_1$-$C_{10}$ qui peut être interrompu par un ou plusieurs atomes d'oxygène, ou $R^3$,

$R^3$ représente un reste de formule $CH_2$-$CH(OR^5)$-$CH_2R^6$ et

$R^4$ représente un radical (alcanoyl en $C_1$-$C_6$)amino éventuellement substitué par un reste hydroxy, alcoxy en $C_1$-$C_4$, phénoxy, chloro ou alcanoyloxy en $C_1$-$C_4$, ou un radical benzoylamino éventuellement substitué,

$R^5$ étant mis pour un atome d'hydrogène ou pour un radical alcanoyle en $C_1$-$C_{10}$, (alcoxy en $C_1$-$C_{10}$)-carbonyle ou mono- ou di-(alkyl en $C_1$-$C_{10}$)carbamoyle, les groupements alkyle desdits substituants pouvant être interrompus par un ou plusieurs atomes d'oxygène, et

$R^6$ étant mis pour un atome de chlore, de brome ou pour un radical hydroxy, phénoxy, allyloxy, alcoxy en $C_1$-$C_{10}$ qui peut être interrompu par un ou plusieurs atomes d'oxygène ou substitué par des restes hydroxy, phénoxy, phényle, alcanoyloxy en $C_1$-$C_8$, chloro, bromo ou cyano, pour un radical alcanoyloxy en $C_1$-$C_6$, mono- ou di-(alkyl en $C_1$-$C_6$)aminocarbonyloxy ou phénylaminocarbonyloxy.

**2.** Colorants azoïques de la famille du thiophène selon la revendication 1, caractérisés en ce que

X représente un radical cyano ou (alcoxy en $C_1$-$C_4$)-carbonyle

Y représente un atome d'halogène ou un radical alcoxy en $C_1$-$C_4$, phénylthio ou phénylsulfonyle,

Z représente un radical cyano, formyle ou un reste de formule $-CH=CB^1B^2$ où $B^1$ est mis pour un reste cyano et $B^2$ pour un reste cyano ou (alcoxy en $C_1$-$C_4$)-carbonyle,

$R^1$ représente un radical alcoxy en $C_1$-$C_4$,

$R^2$ représente un atome d'hydrogène ou un radical alkyle en $C_1$-$C_4$,

$R^3$ représente un reste de formule $-CH_2$-$CH(OR^5)$-$CH_2R^6$ et

$R^4$ représente un radical (alcanoyl en $C_1$-$C_4$)amino,

$R^5$ étant mis pour un atome d'hydrogène ou pour un radical alcanoyle en $C_1$-$C_4$ et

$R^6$ étant mis pour un atome de chlore, de brome ou pour un radical hydroxy, phénoxy, allyloxy, alcoxy en $C_1$-$C_4$ ou alcanoyloxy en $C_1$-$C_4$.

**3.** Utilisation des colorants azoïques de la famille du thiophène selon la revendication 1 pour la teinture de fibres textiles.